# EUROPEAN PATENT SPECIFICATION

(11) **EP 3 813 226 B1**
(45) Date of publication and mention of the grant of the patent: **06.07.2022**
(21) Application number: 19204651.4
(22) Date of filing: 22.10.2019
(51) Int. Cl.: H02J 7/34, B60L 53/12, B60L 53/16, B60L 53/34, E05B 47/00, B60L 15/38, G05D 1/02, G08G 1/00, E02F 9/20, H02J 7/00, B62M 6/40, B60L 53/36

(54) **A VEHICLE MODULE FOR TRANSPORTING AT LEAST ONE PERSON AND A VEHICLE ASSEMBLY**
FAHRZEUGMODUL ZUM TRANSPORT WENIGSTENS EINER PERSON UND FAHRZEUGANORDNUNG
MODULE DE VÉHICULE POUR LE TRANSPORT D'AU MOINS UNE PERSONNE ET ENSEMBLE DE VÉHICULE

(43) Date of publication of application: 28.04.2021
(73) Proprietor: Ningbo Geely Automobile Research & Development Co. Ltd., Hangzhou Bay New District Ningbo 315336 (CN)
(72) Inventor: BELZONS, Lionel, 449 30 NÖDINGE (SE)
(74) Representative: Zacco Sweden AB

(56) References cited:
- WO-A1-2019/135043
- CN-A- 101 992 825
- CN-B- 101 670 869
- DE-A1-102017 207 926
- FR-A1- 2 467 764
- JP-A- 2015 231 289
- KR-A- 20190 104 477
- US-A1- 2016 129 793
- US-A1- 2017 136 887
- US-A1- 2018 290 561

## Description

### Technical field

The present disclosure relates to a vehicle module for transporting at least one person and a vehicle assembly. More specifically, the disclosure relates to a vehicle module for transporting at least one person and a vehicle assembly as defined in the introductory parts of the independent claims.

### Background art

Vehicles for transporting persons have a long tradition of being all-round vehicles that should serve a large number of different purposes. For that reason a personal vehicle normally has four or five seats and a relatively large trunk for storage of transported goods. However, the normal use of a personal vehicle is transportation of one person to and from work, wherein the vehicle is a lot larger than it has to be. This consumes more energy for transportation than is needed.

Vehicles have also traditionally been powered by an Internal Combustion Engine, which is starting to be phased out due to carbon dioxide emissions. Instead vehicles are developing to be powered by electricity. Electrification of the vehicle fleet, however, presents a number of new challenges for distributing and storing the electricity needed. Vehicles are normally equipped with a battery of some sort for storing electricity. The batteries are charged at charging stations at parking lots, and in the driveway or garage of many homes.

However, as the batteries are limited in storage capacity, expensive to manufacture and constitutes a heavy part in the vehicle, the battery is often a limiting factor for an electric vehicle in terms of available driving distance and for keeping a reasonable price of the vehicle.

In the patent document WO 2019135043A1 a solution is mentioned where electric scooters parked for charging are coupled to each other so that the charging is distributed to all parked vehicles from vehicle to vehicle. The patent document KR 20190104477A further discusses battery sharing via induction power transfer between two vehicles.

### Summary

The invention is set out in the appended set of claims.

It is an object of the present disclosure to mitigate, alleviate or eliminate one or more of the above-identified deficiencies and disadvantages in the prior art and solve at least the above mentioned problem. According to a first aspect there is provided a vehicle module for transporting at least one person, comprising at least two wheels adapted for ground engagement, an electric motor operationally connected to the wheels for propelling the vehicle module, an electrical energy storage operationally connected to the electric motor for providing energy to the electric motor, and at least one charging means, which is operationally connected to the energy storage and adapted to be operationally connected to another vehicle module or vehicle for providing charging electricity to and/or receive charging electricity from the another vehicle module or vehicle.

The disclosed solution thus makes it possible to connect two vehicles to each other and share battery power. E.g. if one vehicles has a depleted battery and the other vehicle has a full battery, the vehicle with a full battery can provide energy to the first vehicle so that it can continue driving, e.g. to a charging station.

According to some embodiments, the vehicle module comprises two of said at least one charging means. The vehicle can then share charging electricity with another vehicle while charging its own battery at a charging facility. In that way if all charging stations are occupied it is possible to attach the vehicle to another vehicle to charge from there.

According to some embodiments, the at least one charging means further comprises a respective connection means for securely attaching a vehicle module to another vehicle module or vehicle or to a charging or parking station. The connection means enable a secure connection so that e.g. a vehicle with two wheels will not tip over.

According to some embodiments, a first charging means of the at least one charging means is positioned at a first lateral or medial side of the vehicle module, and a second charging means of the at least one charging means is positioned at a second lateral or medial side of the vehicle module. In some embodiments it may be desired to have the connection means on the side of the vehicles for charging and/or sharing the battery power with other attached vehicles. However, in other embodiments it may be desired to have the charging means at the front and back of the vehicle so that the vehicle, e.g. when charging in a narrow garage or when charging from another vehicle when being parked behind or in front of another vehicle, e.g. at the side of a road.

If a vehicle has charging means with connection means in the front and back additional charging can also be made on the fly. One vehicle can connect to a vehicle in front of it while driving and either be towed while charging or help driving the two connected vehicles. More than two vehicles can then be connected to form a train where charging may be shared between any two or more vehicles while the train is driving at normal speed.

According to some embodiments, the vehicle comprises four of the at least one charging means, wherein the charging means are placed one at each of the front side of the vehicle module, the back side of the vehicle module, the left side of the vehicle module and the right side of the vehicle module, respectively. The vehicle can then connect to vehicles in any direction.

According to some embodiments, the connection means are electromagnetic connections means. This enables a strong connection that in a simple way can align also the charging means. Docking becomes simpler.

According to some embodiments, the at least one charging means are induction charging couplings. In that way no open conductors have to be present and problems of road dust and dirt in rainy weather is no longer a problem. No lids are required for protection of conductors as in normal plug-and socket solutions. In some embodiment, however, the charging is facilitated via normal conductors. However, as charging has to be able to flow in both directions a male-female plug and socket solution is not optimal to use. A flush charging means may be used, e.g. with ring conductors. A charging means with symmetrical protrusions and recesses is also possible, e.g. so that a left connector of one vehicle always may connect with right connector of another vehicle. In some embodiments the charging means may be rotated when connecting to vehicles to make the connection correctly.

According to some embodiments, at least one of the connection means, is arranged to connect the vehicle module to another vehicle module or vehicle so that the wheels of the vehicle module are parallel to the wheels of the connected vehicle module or vehicle. The two vehicles can then connected to each other while driving. According to some embodiments, the vehicle module is identical to a connected other vehicle module. Two vehicles connected side-to-side will then form a broader vehicle possible to drive as one. If each vehicle has two wheels as a motorcycle the combined vehicle will instead resemble a car.

According to some embodiments, when the vehicle module is connected to another vehicle module or vehicle, a control unit of the vehicle module is adapted to take control over the steering of the other vehicle module or vehicle so as to drive the vehicle assembly as one vehicle. In some embodiments the operator or driver may also choose which vehicle should command the other while driving.

According to some embodiments, the control unit is adapted to take control over the steering of the other vehicle module or vehicle only when being positioned on the left side when in right-hand traffic, and only when being positioned on the right side when in left-hand traffic. In that way a the combined vehicle will be driven from the correct side. In right-hand traffic, the steering wheel on four plus wheel vehicles are placed on the left side for traffic safety reasons and the other way around in left-handed traffic.

According to some embodiments, the vehicle module has preferably has at least one seat. The seat may also be surrounded by a user compartment so that vehicle occupants are protected from weather. In some embodiment the user compartment has at least one door.

According to some embodiments, the user compartment is shaped so that when two vehicles are connected and the door is opened, the user compartments of the two vehicles are joined and can be shared for easier social interaction while driving or battery sharing. The door may be available at the side of the vehicle and/or at the front and back of the vehicle so that the user compartment may be expanded in the direction where another vehicle is connected.

According to some embodiments, the electric motor is a hub motor on one or each wheel facilitating efficient drive of the vehicle.

According to some embodiments, the vehicle module has a luggage compartment under the seat to efficiently use al volume of the vehicle. Further luggage compartments may also be present in some embodiments.

According to a second aspect there is provided a vehicle assembly comprising a plurality of vehicle modules according to the first aspect. The vehicle assembly can be any number of vehicles connected in series or in parallel to form a cluster of vehicles where the user compartment can be expanded to one large user compartment for social interaction or better storage of goods. Battery energy can then be shared between any vehicles.

Effects and features of the second aspect are to a large extent analogous to those described above in connection with the first aspect. Embodiments mentioned in relation to the first aspect are largely compatible with the second aspect.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a perspective view of a vehicle according to an embodiment of the present disclosure.
Figure 2 shows a perspective view a vehicle assembly according to an embodiment of the present disclosure.
Figure 3 shows a schematic view of a vehicle of an embodiment of the present disclosure with two vehicle occupants in the vehicle.
Figure 4 is an exploded view showing the charging means and connection means of a vehicle of one an embodiment of the present disclosure.
Figure 5 is a perspective view of the vehicle of Figure 1 charging from a charging station via a charging means of the vehicle.
Figure 6 is a perspective view of a vehicle assembly according to the present disclosure with vehicles connected in series.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

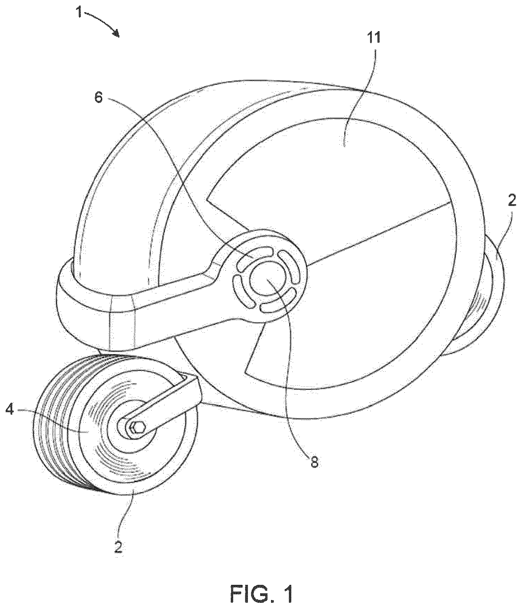

Figure 1 shows the first aspect of this disclosure with a vehicle module 1 for transporting at least one person, comprising at least two wheels 2 adapted for ground engagement, an electric motor 4 operationally connected to the wheels for propelling the vehicle module 1, an electrical energy storage 5 operationally connected to the electric motor 4 for providing energy to the electric motor 4, and at least one charging means 8, which is operationally connected to the energy storage 5 and adapted to be operationally connected to another vehicle module 1' or vehicle for providing charging electricity to and/or receive charging electricity from the another vehicle module 1' or vehicle. The vehicle has a user compartment with a door 11 that can be opened for the occupants of the vehicle to enter or exit the vehicle.

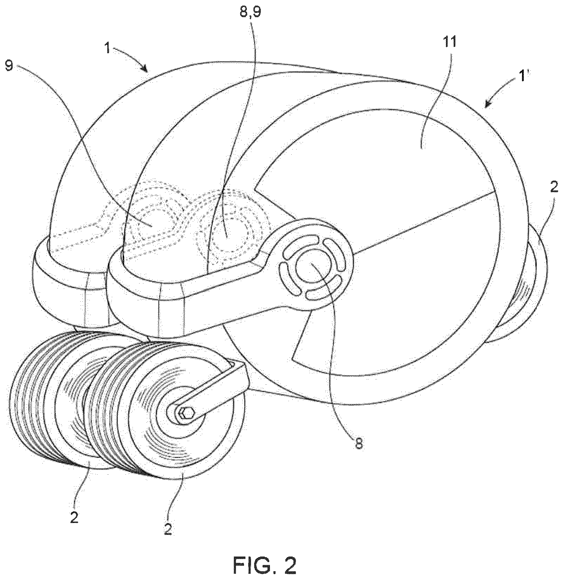

The first charging means 8 of the at least one charging means 8,9 is positioned at a first lateral or medial side of the vehicle module 1, and a second charging means 9 of the at least one charging means 8,9 is positioned at a second lateral or medial side of the vehicle module 1. In Figure 1 this is embodied so that the vehicle can connect at the lateral sides of the vehicle as further shown in Figure 2.

In one embodiment, depicted in Figures 1-5 the vehicle module further comprises two of said at least one charging means 8,9, one on each side. As seen in Figure 2, one vehicle 1 can then share its battery energy with another vehicle 1' or the other way around. The at least one charging means comprises a respective connection means 6,7, 13, 14 for securely attaching a vehicle module 1 to another vehicle module 1' or vehicle or to a charging or parking station 17. At least one of the connection means 6,7, is arranged to connect the vehicle module to another vehicle module 1', as shown in Figure 2, so that the wheels 2 of the vehicle module 1 are parallel to the wheels of the connected vehicle module 1'. In Figure 2 the vehicle module 1 is identical to the connected other vehicle module 1'. The connection means 6,7 are in the depicted embodiment electromagnetic connections means. This leads to that the vehicle can enable the connections means and also disable any of them so as to avoid connecting to other vehicles or charging stations when not intended or wanted.

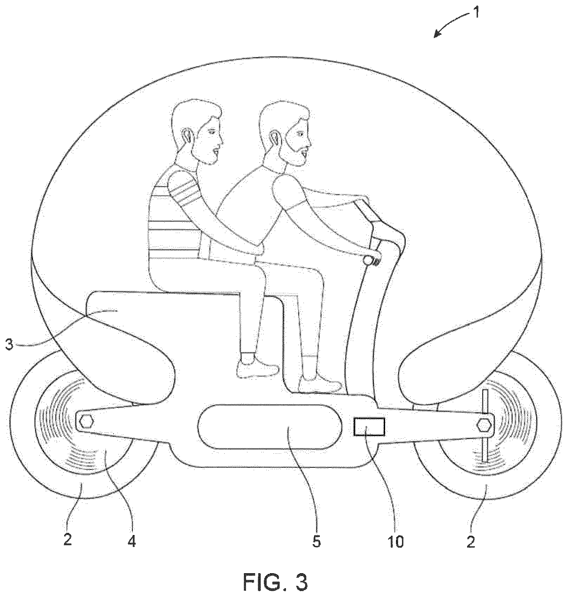

Figure 3 shows a schematic view of a vehicle 1 of an embodiment of the present disclosure with two vehicle occupants in the vehicle 1. The vehicle has a seat 3 under which a luggage compartment 12 is placed. A battery is placed low in the frame of the vehicle together with a control unit 10. In the embodiment shown in Figures 1-6 the electric motor is a hub motor 4 on one or each wheel.

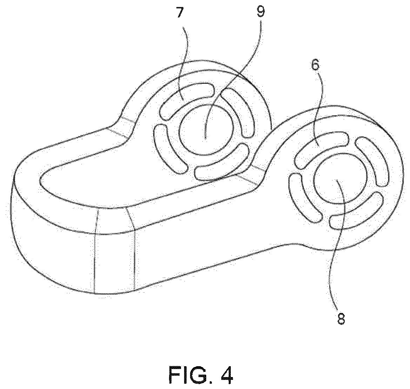

Figure 4 shows an exploded view of the two sets of charging means 8, 9 and connection means 6, 7 of the vehicle 1 shown in Figures 1, 2, 5 and 6. The connecting part may contain the cables and conductors needed between the two charging means while at the same time facilitating safety in the event of an accident. The shackle-formed part may be used for retrofitting electrical vehicles lacking the charging means and coupling means necessary for being part of the charging infrastructure disclosed herein.

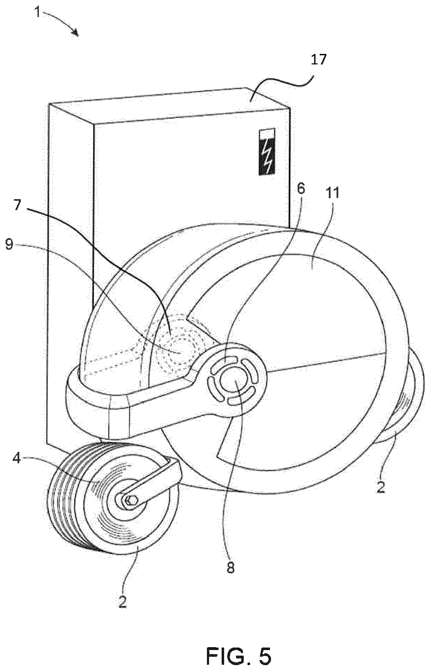

Figure 5 is a perspective view of the vehicle of Figure 1 charging from a charging station via a charging means of the vehicle. The vehicle 1 is connected to the charging station via the charging means 9 and the connections means 7 while charging. If the charging station is not needed for other vehicles, the vehicle may remain at the charging station until the vehicle is used the next time.

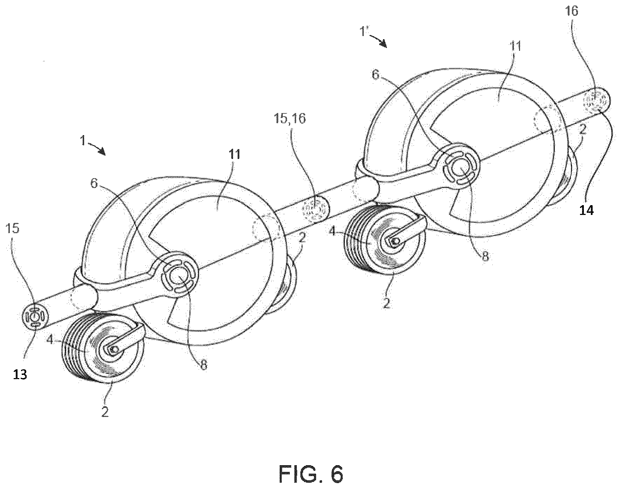

Figure 6 is a perspective view of a vehicle assembly according to the present disclosure with vehicles connected in series. The vehicles shown in Figure 6 comprises four of the at least one charging means 8,9,15,16, wherein the charging means 8,9,15,16 are placed one at each of the front side of the vehicle module, the back side of the vehicle module, the left side of the vehicle module and the right side of the vehicle module, respectively. This means that the vehicles can connect to other vehicles or charging stations at all four sides of the vehicle. Vehicles can thus in that way be connected in matrix formations.

The at least one charging means 8,9,15,16 are in the depicted embodiments induction charging couplings, which is convenient as the charging means 8,9,15,16 then are completely flush and no male-female-connection is needed. It is, however, possible to use charging means with normal conductors still achieving all other benefits of the current disclosure.

Referring to Figure 3, when the vehicle module is connected to another vehicle module 1' or vehicle, a control unit 10 of the vehicle module 1 is adapted to take control over the steering of the other vehicle module 1' or vehicle so as to drive the vehicle assembly as one vehicle. In that way two identical vehicles may be connected as in Figure 2 and driven as one vehicle that now has four wheels instead of two. By opening the doors between the vehicles, the user compartment is enlarged and doubles in space enabling social interaction between occupants and/or the possibility to transport larger objects.

The control unit 10 of Figure 3 is adapted to take control over the steering of the other vehicle module 1' or vehicle only when being positioned on the left side when in right-hand traffic, and only when being positioned on the right side when in left-hand traffic. The combined vehicle shown in Figure 2 is then very close to a normal car, even though it is composed by two detachable motorcycle like vehicles.

The second aspect of this disclosure shows a vehicle assembly comprising a plurality of vehicle modules according to the first aspect. Figure 2 shows a combined vehicle where two vehicles are attached to each other in parallel. Figure 6 shows another possibility where two vehicles are attached to each other in series. A combination of the disclosures of Figure 2 and Figure 6 would lead to a vehicle composed by four vehicle modules 1, 1' in a matrix formation.

The person skilled in the art realizes that the present disclosure is not limited to the preferred embodiments described above. The person skilled in the art further realizes that modifications and variations are possible within the scope of the appended claims. For example, it is understood that any number of vehicles may be attached to each other to form any matrix formation of vehicles where the vehicles may share battery power and where the formation is driven and controlled by one suitable vehicle. Additionally, variations to the disclosed embodiments can be understood and effected by the skilled person in practicing the claimed disclosure, from a study of the drawings, the disclosure, and the appended claims.

## Claims

1. A vehicle module (1) for transporting at least one person, comprising
at least two wheels (2) adapted for ground engagement;
an electric motor (4) operationally connected to the wheels for propelling the vehicle module (1);
an electrical energy storage (5) operationally connected to the electric motor (4) for providing energy to the electric motor (4);
at least one charging means (8,9), which is operationally connected to the energy storage (5) and adapted to be operationally connected to another vehicle module (1') or vehicle for providing charging electricity to and/or receive charging electricity from said another vehicle module (1') or vehicle;
wherein the at least one charging means further comprises a respective connection means (6,7, 13, 14) for securely attaching the vehicle module (1) to said another vehicle module (1') or vehicle or to a charging or parking station (17);
**characterized in that**
at least one of the connection means (6,7), is arranged to connect the vehicle module to said another vehicle module (1') or vehicle so that the wheels (2) of the vehicle module (1) are parallel to the wheels of the connected said another vehicle module (1') or vehicle; and
wherein, when the vehicle module is connected to said another vehicle module (1') or vehicle, a control unit (10) of the vehicle module (1) is adapted to take control over the steering of the said another vehicle module (1') or vehicle so as to drive the vehicle assembly as one vehicle;
wherein, charging power may be shared between the module (1) and said another vehicle module (1') or vehicle while the vehicle assembly is driving.

2. The vehicle module (1) according to claim 1, wherein the vehicle module comprises two of said at least one charging means (8,9).

3. The vehicle module (1) according to claim 2, wherein a first charging means (8) of the at least one charging means (8,9) is positioned at a first lateral or medial side of the vehicle module (1), and a second charging means (9) of the at least one charging means (8,9) is positioned at a second lateral or medial side of the vehicle module (1).

4. The vehicle module (1) according to any one of the preceding claims, further comprising four of the at least one charging means (8,9,15,16), wherein the charging means (8,9,15,16) are placed one at each of the front side of the vehicle module, the back side of the vehicle module, the left side of the vehicle module and the right side of the vehicle module, respectively.

5. The vehicle module (1) according to any one of the preceding claims, wherein the connection means (6,7) are electromagnetic connections means.

6. The vehicle module (1) according to any one of the preceding claims, wherein the at least one charging means (8,9,15,16) are induction charging couplings.

7. The vehicle module (1) according to any one of the preceding claims, wherein vehicle module (1) is identical to a connected other vehicle module (1').

8. The vehicle module (1) according to claim 1, wherein the control unit (10) is adapted to take control over the steering of the other vehicle module (1') or vehicle only when being positioned on the left side when in right-hand traffic, and only when being positioned on the right side when in left-hand traffic.

9. The vehicle module (1) according to any one of the preceding claims, wherein the vehicle module (1) has at least one door.

10. The vehicle module (1) according to any one of the preceding claims, wherein the vehicle module (1) has at least one seat (3).

11. The vehicle module (1) according to any one of the preceding claims, wherein the electric motor (4) is a hub motor on one or each wheel.

12. A vehicle assembly comprising a plurality of vehicle modules according to any one of claims 1-11.

## Patentansprüche

1. Fahrzeugmodul (1) zum Transportieren mindestens einer Person, umfassend
mindestens zwei Räder (2), die für Bodenkontakt ausgelegt sind;
einen elektrischen Motor (4), der mit den Rädern zum Antreiben des Fahrzeugmoduls (1) operativ verbunden ist;
einen elektrischen Energiespeicher (5), der zur Bereitstellung von Energie für den elektrischen Motor (4) mit dem elektrischen Motor (4) operativ verbunden ist;
mindestens ein Lademittel (8,9), das mit dem Energiespeicher (5) operativ verbunden ist und dafür ausgelegt ist, mit einem anderen Fahrzeugmodul (1') oder Fahrzeug operativ verbunden zu werden zur Bereitstellung von Ladeelektrizität für und/oder zum Empfangen von Ladeelektrizität von dem anderen Fahrzeugmodul (1') oder Fahrzeug;
wobei das mindestens eine Lademittel weiter ein jeweiliges Verbindungsmittel (6,7, 13, 14) umfasst zum sicheren Anschließen des Fahrzeugmoduls (1) an das andere Fahrzeugmodul (1') oder Fahrzeug oder an eine Lade- oder Parkstation (17);
**dadurch gekennzeichnet, dass**
mindestens eines der Verbindungsmittel (6,7) dafür eingerichtet ist, das Fahrzeugmodul mit dem anderen Fahrzeugmodul (1') oder Fahrzeug zu verbinden, so dass die Räder (2) des Fahrzeugmoduls (1) zu den Rädern des damit verbundenen anderen Fahrzeugmoduls (1') oder Fahrzeugs parallel sind; und wobei eine Steuereinheit (10) des Fahrzeugmoduls (1), wenn das Fahrzeugmodul mit dem anderen Fahrzeugmodul (1') oder Fahrzeug verbunden ist, dafür eingerichtet ist, die Steuerung des anderen Fahrzeugmoduls (1') oder Fahrzeugs zu übernehmen, damit die Fahrzeugeinheit als ein Fahrzeug getrieben wird;
wobei Ladeleistung zwischen dem Modul (1) und dem anderen Fahrzeugmodul (1') oder Fahrzeug geteilt werden kann, während die Fahrzeugeinheit angetrieben wird.

2. Fahrzeugmodul (1) nach Anspruch 1, wobei das Fahrzeugmodul zwei von dem mindestens einen Lademittel (8,9) umfasst.

3. Fahrzeugmodul (1) nach Anspruch 2, wobei ein erstes Lademittel (8) des mindestens einen Lademittels (8,9) an einer ersten lateralen oder medialen Seite des Fahrzeugmoduls (1) positioniert ist, und ein zweites Lademittel (9) von dem mindestens einen Lademittel (8,9) an einer zweiten lateralen oder medialen Seite des Fahrzeugmoduls (1) positioniert ist.

4. Fahrzeugmodul (1) nach einem der vorgehenden Ansprüche, weiter umfassend vier von dem mindestens einen Lademittel (8,9,15,16), wobei die Lademittel (8,9,15,16) jeweils ein an der Vorderseite des Fahrzeugmoduls, ein an der Rückseite des Fahrzeugmoduls, ein an der linken Seite des Fahrzeugmoduls und ein an der rechten Seite des Fahrzeugmoduls angeordnet sind.

5. Fahrzeugmodul (1) nach einem der vorgehenden Ansprüche, wobei die Verbindungsmittel (6,7) elektromagnetische Verbindungsmittel sind.

6. Fahrzeugmodul (1) nach einem der vorgehenden Ansprüche, wobei das mindestens eine Lademittel (8,9,15,16) Induktionsladekupplungen sind.

7. Fahrzeugmodul (1) nach einem der vorgehenden Ansprüche, wobei das Fahrzeugmodul (1) mit einem verbundenen anderen Fahrzeugmodul (1') identisch ist.

8. Fahrzeugmodul (1) nach Anspruch 1, wobei die Steuereinheit (10) dafür eingerichtet ist, die Steuerung des anderen Fahrzeugmoduls (1') oder Fahrzeugs nur dann zu übernehmen, wenn sie auf der linken Seite bei Rechtsverkehr positioniert ist, und nur dann, wenn sie auf der rechten Seite bei Linksverkehr positioniert ist.

9. Fahrzeugmodul (1) nach einem der vorgehenden Ansprüche, wobei das Fahrzeugmodul (1) mindestens eine Tür aufweist.

10. Fahrzeugmodul (1) nach einem der vorgehenden Ansprüche, wobei das Fahrzeugmodul (1) mindestens einen Sitz (3) aufweist.

11. Fahrzeugmodul (1) nach einem der vorgehenden Ansprüche, wobei der elektrische Motor (4) ein Nabenmotor auf einem oder jedem Rad ist.

12. Fahrzeugeinheit umfassend eine Mehrheit von Fahrzeugmodulen nach einem der Ansprüche 1-11.

## Revendications

1. Module de véhicule (1) pour le transport d'au moins une personne, comprenant
au moins deux roues (2) adaptées pour venir en contact avec le sol ;
un moteur électrique (4) relié de manière opérationnelle aux roues pour propulser le module de véhicule (1) ;
un stockage d'énergie électrique (5) connecté de manière opérationnelle au moteur électrique (4) pour fournir de l'énergie au moteur électrique (4) ;
au moins un moyen de charge (8,9) connecté de manière opérationnelle au stockage d'énergie (5) et adapté pour être connecté de manière opérationnelle à un autre module de véhicule (1') ou au véhicule pour fournir de l'électricité de charge à et / ou recevoir de l'électricité de charge dudit autre module de véhicule (1') ou du véhicule ;
dans lequel l'au moins un moyen de charge comprend en outre un moyen de connexion respectif (6,7, 13, 14) pour fixer solidement le module de véhicule (1) à un autre module de véhicule (1') ou au véhicule ou à une station de charge ou de stationnement (17) ;
**caractérisé en ce**
**qu'**au moins l'un des moyens de connexion (6,7) est agencé pour connecter le module de véhicule audit autre module de véhicule (1') ou au véhicule si bien que les roues (2) du module de véhicule (1) sont parallèles aux roues du module de véhicule connecté (1') ou du véhicule ; et
dans lequel, lorsque le module de véhicule est connecté à un autre module de véhicule (1') ou au véhicule, une unité de commande (10) du module de véhicule (1) est adaptée pour effectuer une commande sur la direction dudit autre module de véhicule (1') ou du véhicule de manière à entraîner l'ensemble de véhicule comme un seul véhicule ; et
dans lequel la puissance de charge peut être partagée entre le module (1) et ledit autre module de véhicule (1') ou le véhicule pendant que l'ensemble de véhicule est en entraînement.

2. Module de véhicule (1) selon la revendication 1, dans lequel le module de véhicule comprend deux dudit au moins un moyen de charge (8,9).

3. Module de véhicule (1) selon la revendication 2, dans lequel un premier moyen de charge (8) de l'au moins un moyen de charge (8,9) est positionné sur un premier côté latéral ou médian du module de véhicule (1), et un deuxième moyen de charge (9) de l'au moins un moyen de charge (8,9) est positionné sur un deuxième côté latéral ou médian du module de véhicule (1).

4. Module de véhicule (1) selon l'une quelconque des revendications précédentes, comprenant en outre quatre de l'au moins un moyen de charge (8,9,15,16), dans lequel les moyens de charge (8,9,15,16) sont placés un à chacun respectivement du côté avant du module de véhicule, du côté arrière du module de véhicule, du côté gauche du module de véhicule et du côté droit du module de véhicule.

5. Module de véhicule (1) selon l'une quelconque des revendications précédentes, dans lequel les moyens de connexion (6,7) sont des moyens de connexions électromagnétiques.

6. Module de véhicule (1) selon l'une quelconque des revendications précédentes, dans lequel l'au moins un moyen de charge (8,9,15,16) sont des couplages de charge par induction.

7. Module de véhicule (1) selon l'une quelconque des revendications précédentes, dans lequel le module de véhicule (1) est identique à un autre module de véhicule connecté (1').

8. Module de véhicule (1) selon la revendication 1, dans lequel l'unité de commande (10) est adaptée pour effectuer une commande sur la direction de l'autre module de véhicule (1') ou du véhicule uniquement lorsqu'il est positionné sur le côté gauche lors de la circulation à droite, et uniquement lorsqu'il est positionné sur le côté droit lors de la circulation à gauche.

9. Module de véhicule (1) selon l'une quelconque des revendications précédentes, dans lequel le module de véhicule (1) présente au moins une porte.

10. Module de véhicule (1) selon l'une quelconque des revendications précédentes, dans lequel le module de véhicule (1) présente au moins un siège (3).

11. Module de véhicule (1) selon l'une quelconque des revendications précédentes, dans lequel le moteur électrique (4) est un moteur à moyeu sur une ou chaque roue.

12. Ensemble de véhicule comprenant une pluralité de modules de véhicule selon l'une quelconque des revendications 1 à 11.
